Europäisches Patentamt

European Patent Office

Office européen des brevets

(11) Publication number: **0 406 450 A1**

# EUROPEAN PATENT APPLICATION
## published in accordance with Art. 158(3) EPC

(21) Application number: 90901903.6

(22) Date of filing: 23.01.90

(86) International application number: PCT/JP90/00073

(87) International publication number: WO 90/07878 (26.07.90 90/17)

(51) Int. Cl.5: **A01N 57/12, A01N 57 20**

(30) Priority: 23.01.89 JP 113555/89

(43) Date of publication of application: **09.01.91 Bulletin 91/02**

(84) Designated Contracting States: **BE CH ES FR GB IT LI LU NL**

(71) Applicant: RHONE POULENC AGRO KABUSHIKI KAISHA
9-20, Akasaka 1-chome Minato-ku
Tokyo 107(JP)

Applicant: NIPPON SODA CO., LTD.
2-1, Ohtemachi 2-chome
Chiyoda-ku, Tokyo 100(JP)

(72) Inventor: KOSHIBA, Ryouichi
2-27, Ishidoumachi Aizuwakamatsu-shi
Fukushima-ken 965(JP)
Inventor: KUBOTA, Tetsuo
267, Kaihotsuhonchou Takaoka-shi
Toyama-ken 933(JP)
Inventor: YAMAMURO, Shouichi
515, Shimogoze Oyabe-shi
Toyama-ken 932(JP)

(74) Representative: Woods, Geoffrey Corlett et al
J.A. KEMP & CO. 14 South Square Gray's
Innlnn
London WC1R 5EU(GB)

(54) STABILIZED PESTICIDE COMPOSITION.

(57) A stabilized pesticide composition comprising an agricultural chemical containing aluminium tris-(ethylphosphonate) as an active ingredient and a carbonate, oxide or hydroxide of a mono- or divalent metal as a stabilizer.

DESCRIPTION

## STABILIZED PESTICIDAL COMPOSITION

[Technical Field]

This invention relates to stabilization of fungicide which contains aluminum-tris(ethyl phosphonate) (hereinafter referred to as "Phosethyl") as the active pesticidal ingredient.

[Background Art]

Phosethyl, a permeable and translocatable agricultural and horticultural fungicide developed by Rhône Poulenc of France, exhibits excellent activity in prevention of downy mildew and other infections in plants by enhancing the plants' self-defence mechanism to prevent fungi from invading them [v. Japanese Patent Application Laid-Open (KOKAI) No. 50-94137].

Due to the recent wide distribution of pesticide, lasting activity of the pesticide has been an objective of the researchers. The prolongation of the effective period, such as one year prolongation from 3 years in the past to 4 years, would provide various advantages. For example, on the one hand, a user who buys the product can delay its use, for whatever the reason, to avoid any loss involved in the purchase, and on the other, manufacturers can greatly save the transportation cost owing to the distribution stock, as well as the research and packaging expenses.

Phosethyl has been considered as a stable chemical. However, it was found that a long-term storage could invite solidification of Phosethyl under certain conditions. The cause of this solidification was found to be a large amount of the hydrolysate, phosphorous acid, in the solidified Phosethyl.

1

It is expected that the hydrolysis causes not only weakenening of the biological activity of Phosethyl but also considerable degration in its physical properties. It thus may lower the commercial value of the product and may increase the phytotoxicity against the crops.

In a country like ours where the climatic condition is that of hot and humid, a special formulating technique is required in order to produce chemicals which stay stable for a long time even under such conditions.

In order to stabilize the pesticidal composition, an inactive carrier or an adjuvant has been carefully selected for application, and researches on hydrolysis preventive agent have been conducted. But none of the results was satisfactory.
[Disclosure of Invention]

It was also found: that the raw Phosethyl powder starts absorbing moisture at above-50% humidity; that the hydrolysis was caused by the absorbed moisture; and that the hydrolysis was accelerated by the moisture increase and by presence of phosphorous acid which is the raw material as well as a decomposition product of Phosethyl.

The present inventors have done various studies on stabilization of pesticidal composition containing Phosethyl and discovered that Phosethyl can be notably stabilized in the composition under a high-temperature and high-humidity condition by adding a small amount of the anhydrous carbonate of an alkali earth metal to the composition. On the basis of this finding, further reseach has been continued.

The present invention thus provides a stabilized pesticidal composition containing Phosethyl as the active pesticidal

2

ingredient, characterized in that it comprises a carbonate, oxide or hydroxide of a monovalent or divalent metal as a stabilizer.

Examples of the stabilizers which may be added are:

1. Carbonates of divalent metals such as $CaCO_3$, $BaCO_3$ and $ZnCO_3$,

2. Oxides of divalent metals such as $CaO$ and $ZnO$,

3. Hydroxides of divalent metals such as $Ca(OH)_2$, and

4. Carbonates of monovalent metals such as $Na_2CO_3$, $K_2CO_3$ and $NaHCO_3$.

The content of the stabilizer is from 0.1 to 5 %, preferably, from 0.2 to 2 % by weight of the composition.

As the active ingredients, Captan, Thiophanate-methyl, a basic copper chloride and the like may be contained in addition to Phosethyl.

The inclusion of an alkali salt, such as an alkali earth metal carbonate, in such pesticide for the purpose of stabilizing Phosethyl has not been considered before, since Phosethyl is an aluminum salt of organic phosphorous acid.

However, by adding a stabilizer such as the carbonates, the unstable active ingredient may remarkably be stabilized regardless the severe conditions such as high temperature and high humidity.

By the way, anhydrous calcium chloride, anhydrous magnesium sulfate and anhydrous sodium sulfate, which are more powerful desiccant to reduce the atmospheric equilibrium moisture, did not show any significant activity for the prevention of the ingredient quality deterioration, and addition of those desiccants in a small amount did not provide sufficient results.

[Examples]

The agricultural and horticultural fungicide composition of the present invention does not require any special method or apparatus.

In addition to Phosethyl and an above-mentioned stabilizer, the agricultural and horticultural fungicide of the invention may be mixed with other fungicide or pesticide, or may include an effective synergist, adhesive, other anti-aging agent, dispersibility modifier, fluidity modifier, etc.

The following examples further describe, however do not limit, the present invention. In the examples, "parts" refers to parts by weight.

Example 1: Wettable composition

Ingredients

| | |
|---|---|
| Phosethyl | 42.5 parts |
| Captan | 45.5 parts |
| Newkalgen NV-1203 (POE tridecyl ether by Takemoto Oil & Fat Co) | 3.0 parts |
| Newkalgen NV-1420 (POE stearyl ether by Takemoto Oil & Fat Co) | 6.0 parts |
| White carbon | 2.0 parts |
| Calcium carbonate | 1.0 part |

Above ingredients were mixed together and powdered by an air grinder, whereby a water-dispersible powder of uniform composition was obtained.

Example 2:  Wettable composition

Ingredients

| | |
|---|---|
| Phosethyl | 42.5 parts |
| Captan | 45.5 parts |
| Newkalgen NV-1203 | 3.0 parts |
| Newkalgen NV-1420 | 6.0 parts |
| White carbon | 2.8 parts |
| Calcium carbonate | 0.2 parts |

In addition to the above ingredients, each stabilizer below was added to prepare compositions of Examples 3-8, following the same procedure as Example 1.

| Example | Stabilizer |
|---|---|
| Example 3 | Sodium carbonate |
| Example 4 | Sodium bicarbonate |
| Example 5 | Barium carbonate |
| Example 6 | Potassium carbonate |
| Example 7 | Zinc oxide |
| Example 8 | Calcium hydroxide |

Example 9:  Wettable powder

Ingredients

| | |
|---|---|
| Phosethyl | 88.0 parts |
| Newkalgen NV-1203 | 3.0 parts |
| Newkalgen NV-1420 | 6.0 parts |
| White carbon | 2.0 parts |
| Calcium carbonate | 1.0 part |

5

Reference Example 1:  Wettable powder

Ingredients

| | |
|---|---|
| Phosethyl | 42.5 parts |
| Captan | 45.5 parts |
| Newkalgen NV-1203 | 3.0 parts |
| Newkalgen NV-1420 | 6.0 parts |
| White carbon | 3.0 parts |

Reference Example 2:  Wettable powder

Ingredients

| | |
|---|---|
| Phosethyl | 42.5 parts |
| Captan | 45.5 parts |
| Newkalgen NV-1203 | 3.0 parts |
| Newkalgen NV-1420 | 6.0 parts |
| White carbon | 2.0 parts |
| Calcium chloride (anhydrous) | 1.0 part |

Reference Example 3:  Wettable powder

Ingredients

| | |
|---|---|
| Phosethyl | 42.5 parts |
| Captan | 45.5 parts |
| Newkalgen NV-1203 | 3.0 parts |
| Newkalgen NV-1420 | 6.0 parts |
| White carbon | 2.0 parts |
| Magnesium sulfate (anhydrous) | 1.0 part |

Test Example

Test Method

100 g of each of the obtained compositions was put in two separate polyester laminate bags permeable to water vapor, which were then heat-sealed. Each composition bagged in pair ware together placed in a thermostatic humidistat at a temperature of 50°C and a humidity of 95%. Bags were the taken out, one on the 14th day and the other on the 28th day, and weighed to calculate the weight change. By the content of the free phosphorous acid (the decomposition product of Phosethyl), the remaining Phosethyl content was determined.

| No. | Free Phosphorous Acid Content *1 (in terms of Phosethyl) | | | Phosethyl *2 Remaining Content | |
|---|---|---|---|---|---|
| | Initial Content | 14th day | 28th day | 14th day | 28th day |
| Example | % | % | % | % | % |
| I | 1.2 | 1.4 | 1.7 | 99.4 | 98.7 |
| II | 1.3 | 1.7 | 2.3 | 98.9 | 97.3 |
| III | 1.3 | 1.5 | 1.7 | 99.4 | 98.8 |
| IV | 1.3 | 1.5 | 1.8 | 99.4 | 98.6 |
| V | 1.4 | 1.5 | 1.7 | 99.9 | 99.1 |
| VI | 1.5 | 1.5 | 1.9 | 99.9 | 98.8 |
| VII | 1.4 | 1.4 | 1.7 | 99.9 | 99.1 |
| VIII | 1.6 | 1.7 | 1.9 | 99.6 | 99.0 |
| IX | 2.4 | 2.9 | 3.5 | 99.9 | 98.4 |
| Reference Example | | | | | |
| I | 1.2 | 1.8 | 34.1 | 98.4 | 13.6 |
| II | 1.3 | 1.6 | 5.9 | 99.1 | 87.9 |
| III | 1.4 | 1.5 | 19.8 | 99.6 | 53.3 |

*1:

Content of
Free Phosphorous Acid        =        $\dfrac{[C_2H_5HPO_3]_3Al}{3H_3PO_3}$       X Measured Value
(in terms of Phosethyl)

*2:

Remaining Phosethyl Content = $\dfrac{A - (C \times W - B)}{A}$ X 100(%)

in which  A; Initial Phosethyl content
          B; Initial free phosphorous acid content (in terms of
             Phosethyl)
          C; Free phosphorous acid content after the
             ill-treatment (in terms of Phosethyl)
          W; Weight change rate after the ill-treatment
             (Weight after the ill-treatment/Initial Weight)

What is claimed is:

1.    A stabilized pesticidal composition containing aluminum-tris(ethyl phosphonate) as the pesticidal active ingredient, characterised in that it comprises a carbonate, oxide or hydroxide of a monovalent or divalent metal as a stabilizer.

2.    The pesticidal composition as set forth in Claim 1 which contains the stabilizer in an amount of from 0.1 to 5 % by weight of the composition.

# INTERNATIONAL SEARCH REPORT

International Application No PCT/JP90/00073

## I. CLASSIFICATION OF SUBJECT MATTER (if several classification symbols apply, indicate all) [6]

According to International Patent Classification (IPC) or to both National Classification and IPC

Int. Cl$^5$     A01N57/12, A01N57/20

## II. FIELDS SEARCHED

Minimum Documentation Searched [7]

| Classification System | Classification Symbols |
|---|---|
| IPC | A01N57/12, A01N57/20 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 59-184112 (Rhône-Poulenc Agrochimie FR), 19 October 1984 (19. 10. 84) & BE, A1, 901121 | 1 - 2 |
| X | JP, A, 60-132908 (Rhône-Poulenc Agrochimie FR), 16 July 1985 (16. 07. 85) & DE, A1, 3410011 | 1 - 2 |
| Y | GB, A1, 2163652 (Rhône-Poulenc Agrochimie FR), 5 March 1986 (05. 03. 86) | 1 - 2 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 11, 1990 (11. 04. 90) | April 23, 1990 (23. 04. 90) |
| International Searching Authority | Signature of Authorized Officer |
| Japanese Patent Office | |

Form PCT/ISA/210 (second sheet) (January 1985)